# EUROPÄISCHE PATENTSCHRIFT

(11) **EP 2 336 979 B1**
(45) Veröffentlichungstag und Bekanntmachung des Hinweises auf die Patenterteilung: **12.03.2014**
(21) Anmeldenummer: 09175113.1
(22) Anmeldetag: 05.11.2009
(51) Int. Cl.: G06T 17/00, G06T 19/00, G06T 7/00

(54) **Verfahren und Vorrichtung zur Segmentierung von medizinischen Bilddaten**
Method and device for segmenting medical image data
Procédé et dispositif de segmentation de données d'images médicales

(43) Veröffentlichungstag der Anmeldung: 22.06.2011
(73) Patentinhaber: TomTec Imaging Systems GmbH, 85716 Unterschleissheim (DE)
(72) Erfinder: Schummers, Georg, 80935 München (DE)
(74) Vertreter: Müller Schupfner & Partner

(56) Entgegenhaltungen:
- US-A- 5 621 872
- US-A1- 2004 267 125
- WOLF I ET AL: "Three-dimensional annulus segmentation and hybrid visualisation in echocardiography" COMPUTERS IN CARDIOLOGY 2001. ROTTERDAM, THE NETHERLANDS, SEPT. 23 - 26, 2001; [COMPUTERS IN CARDIOLOGY], NEW YORK, NY : IEEE, US LNKD- DOI:10.1109/CIC.2001.977602, 23. September 2001 (2001-09-23), Seiten 105-108, XP010573227 ISBN: 978-0-7803-7266-5
- VOTTA E ET AL: "From real-time 3D echocardiography to mitral valve finite element analysis: A novel modeling approach" COMPUTERS IN CARDIOLOGY, 2008, IEEE, PISCATAWAY, NJ, USA, 14. September 2008 (2008-09-14), Seiten 1-4, XP031406475 ISBN: 978-1-4244-3706-1
- JAN ERIK SOLEM ET AL: "Reconstructing Open Surfaces from Image Data" INTERNATIONAL JOURNAL OF COMPUTER VISION, KLUWER ACADEMIC PUBLISHERS, BO LNKD- DOI:10.1007/S11263-006-7068-9, Bd. 69, Nr. 3, 1. Mai 2006 (2006-05-01), Seiten 267-275, XP019410144 ISSN: 1573-1405

## Beschreibung

Die vorliegende Erfindung betrifft ein Verfahren und eine Vorrichtung zur Segmentierung von medizinischen Bildern einer nicht planen Fläche eines Objekts, insbesondere einer Herzklappe, nach den Ansprüchen 1 und 10. Ein hierfür geeignetes Computerprogrammprodukt ist im Anspruch 12 gekennzeichnet. Diese Verfahren und Vorrichtungen eignen sich insbesondere zur Darstellung der Vorhof-Herz-kammer-Klappen, insbesondere der Mitralklappe, die den linken Vorhof des Herzens gegenüber der linken Herzkammer abgrenzt. Für die medizinische Bildgebung ist es dabei besonders wichtig, die Klappensegel der Mitralklappe zu segmentieren, um Anomalien dreidimensional oder-während der Herzbewegung - auch vierdimensional darzustellen.

Beim Stand der Technik ist eine solche Segmentierung von nicht planen Flächen bisher nur manuell möglich. Beispielsweise muss beim System Philips QLab® der Bediener der Software die Segelkonturen der Klappensegel der Mitralklappe in 9 - 12 parallelen Schnittbildern einzeichnen, die in 3D/4D- Ultraschallvolumendaten vorliegen, bzw. anhand dieser erzeugt werden können. Diese manuell eingezeichneten Segelkonturen dienen dann zur Darstellung einer dreidimensionalen Kontur in der dreidimensionalen Ansicht der entsprechenden Herzklappe.

Die manuelle Segmentierung solcher nicht planen Flächen durch den Anwender ist umständlich und langwierig. Darüber hinaus ist nicht ausgeschlossen, dass der Anwender auf den zweidimensionalen Schichtbildem, die gegebenenfalls aus einem dreidimensionalen Bilddatensatz (beispielsweise Ultraschall, CT oder MR) gewonnen werden, falsche Konturen detektiert, so dass die manuell detektierten Flächen gegebenenfalls fehlerbehaftet sind. Auch können die Klappensegel im Herzen bei der Aufnahme von vierdimensionalen Bilddatensätzen, d. h. längs einer Zeitachse aufgenommenen dreidimensionalen Bilddatensätzen, doppelt erscheinen, wenn die zeitliche Auflösung bei der Aufnahme nicht ausreicht, um eine schnelle Klappenbewegung zu erkennen. Werden solche Datensätze schichtweise, d. h. auf Basis zweidimensionaler Schnittbilder, bearbeitet, geht der räumliche Zusammenhang verloren und die Konturierung der Klappensegel ist inkonsistent.

Schließlich hängt eine manuelle Segmentierung auch stark vom jeweiligen Anwender ab, so dass unterschiedliche Ergebnisse bei gleichen drei- oder vierdimensionalen Bilddatensätzen zu erwarten sind, je nachdem welcher Anwender diese Datensätze bearbeitet.

Aus dem Dokument US2004/0267125 ist ein Verfahren zur automatischen Segmentierung zweidimensionaler medizinischer Ultraschallbilder bekannt. Dieses Verfahren beinhaltet die Detektion der Endpunkte der zu segmentierenden Kontur sowie weiterer, zur Kontur gehöriger Punkte. Die detektierten Punkte werden durch ein Polynom approximiert und das Polynom iterativ mit Hilfe von Abstandswerten zwischen Polynom und erkannten Bildpunkten modifiziert. In dem Dokument wird ebenfalls darauf hingewiesen, dass das Verfahren für dreidimensionale Bilddaten entsprechend erweitert werden kann.

Aus Ionasec et. al.: "Dynamic model-driven quantitative and visual evaluation of the aortic valve from 4D CT", International Conference on Medical Image Computing and Computer-Assisted Intervention 2008, Volume 11, Pt 1, Seiten 686-94, ist ein Verfahren zum Anpassen eines 3D Modells an CT Bilddaten des Herzens bekannt. In diesem Verfahren wird mittels Thin-Plate-Spline Transformation und in den Volumendaten erkannten Merkpunkten eine initiale globale Modellanpassung durchgeführt. Um eine genaue Abgrenzung des Objektes zu erhalten, wird das Modell anschließend lokal anhand der Ergebnisse einer Konturerkennung verformt.

Der vorliegenden Erfindung liegt daher die Aufgabe zugrunde, die Segmentierung von medizinischen Bildern einer nicht planen Fläche zu vereinfachen und zu automatisieren, so dass bei drei- oder vierdimensionalen Datensätzen einheitliche und standardisierte Segmentierungen erzielt werden, die die Realität möglichst exakt approximieren. Dabei geht die vorliegende Erfindung davon aus, dass das Objekt bereits aufgenommen und anhand eines drei- oder vierdimensionalen Bilddatensatzes abgespeichert wurde und dass das Objekt mittels eines bekannten 3D-Volmen-Renderings zufriedenstellend dargestellt werden kann.

Die vorliegende Erfindung löst diese Aufgabe durch die in den unabhängigen Patentansprüchen 1 und 10 gekennzeichneten Merkmale. Bevorzugte Ausführungsformen der Erfindung sind in den Unteransprüchen gekennzeichnet und dort beansprucht. Ein für die Ausführung der Erfindung geeignetes Computerprogrammprodukt ist im Patentanspruch 12 gekennzeichnet.

Die vorliegende Erfindung geht davon aus, dass die nicht plane Fläche eines Objekts durch ein drei- oder vierdimensionales, medizinisches Bildgebungsverfahren bereits aufgenommen wurde, so dass ein drei- bzw. vierdimensionaler Bilddatensatz vorliegt. Dies kann ein CT-Bilddatensatz, ein MR-Bilddatensatz oder auch ein Ultraschall-Bilddatensatz sein. Beispielsweise existiert bereits eine von der Anmelderin entwickelte Software "4D MV Assessment", die es ermöglicht, ein Volumen-Rendering anhand von drei- oder vierdimensionalen Bilddaten durchzuführen, so dass nicht plane Flächen, wie beispielsweise die Klappensegel der Mitralklappe des Herzens, im geschlossenen Zustand gut dargestellt werden können.

Ein hierfür hilfreiches Verfahren ist beispielsweise in der deutschen Patentanmeldung DE 103 39 979 beschrieben. Dabei kann ein Zeiger in einem mehrdimensionalen Datensatz derart manipuliert werden, dass ein bestimmter Bereich des dreioder vierdimensionalen Datensatzes betrachtet werden kann. Beispielsweise kann der Zeiger senkrecht zur Durchlassöffnung der Mitralklappe ausgerichtet werden, so dass diese quasi "von oben" betrachtet werden kann. Mithilfe eines solchen Verfahrens können somit beliebige Bereiche eines Objekts, d. h. die zu untersuchenden, nicht planen Flächen, herausgeschnitten und mit dem vorliegenden erfindungsgemäßen Verfahren weiterbearbeitet werden:

Hierzu wird zunächst eine Flächenbegrenzung detektiert, die die nicht plane Fläche des Objekts begrenzt. Anschließend wird zwischen dieser Flächenbegrenzung eine Modellfläche aufgespannt, die die Begrenzungslinie der Flächenbegrenzung bevorzugt auf kürzestem Weg überspannt. Diese Modellfläche wird dann anhand von Abstandsinformationen korrigiert, wobei die Abstandsinformationen Informationen über den Abstand zwischen der Modellfläche und der nicht planen Fläche des Objekts beinhalten, so dass, ausgehend von der Modellfläche, eine korrigierte Modellfläche entsteht, die die nicht plane Fläche des Objekts möglichst genau approximiert. Anschließend kann die korrigierte Modellfläche in bekannten Modellen drei- oder vierdimensional dargestellt werden.

Bei der Darstellung einer Herzklappe besteht die nicht plane Fläche in der Regel aus mindestens einer ersten Teilfläche (ein erstes Klappensegel) und einer zweiten Teilfläche (ein zweites Klappensegel), die jeweils gekrümmt und mittels einer Trennlinie (Schließungslinie der Klappensegel) voneinander getrennt sind. Die korrigierte Modellfläche kann dann vor dem Darstellen längs dieser Trennlinie in die mindestens zwei Teilflächen getrennt werden, so dass jedes Klappensegel einzeln darstellbar ist.

Die Flächenbegrenzung ist insbesondere eine geschlossene Linie, so dass die Modellfläche die nicht plane Fläche überspannt. Das Detektieren der Flächenbegrenzung erfolgt nach einer bevorzugten Ausführungsform der vorliegenden Erfindung anhand von drei- oder vierdimensionalen Bilddatensätzen, in dem Landmarken in diesen Datensätzen automatisch detektiert werden. Diese Landmarken begrenzen die nicht plane Fläche und werden gemäß der vorliegenden Erfindung zu einer zusammenhängenden Linie interpoliert.

Bei der Segmentierung der Mitralklappe eines Herzens erfolgt ein automatisches Detektieren des Annulus, der eine geschlossene Flächenbegrenzung der Mitralklappe darstellt. Dies kann unterschiedlich realisiert werden: Eine Möglichkeit besteht darin, den Annulus durch ein Oberflächen-Rendering des dreidimensionalen Volumendatensatzes zu detektieren, in dem Punkte größter Krümmung aus der Oberfläche, beispielsweise des linken Ventrikels des Herzens, detektiert und mit einer zusammenhängenden Linie verbunden werden, so dass eine in sich abgeschlossene Flächenbegrenzung entsteht, die im Wesentlichen dem Annulus der Mitralklappe entspricht. Eine andere Möglichkeit besteht darin, eine geeignete Schnittfläche zu detektieren, bsp. mittels eines in der WO 2005/031655 beschriebenen Zeigers, die dazu orthogonal liegende Ebene auszuwählen und auf dieser Ebene den Annulus zu detektieren, indem die Grauwertunterschiede an der Grenzlinie des Annulus entsprechend detektiert werden. Weiterhin können um den Annulus liegende und senkrecht auf der Mitralklappe stehende, rotierte Schnittbilder ausgewählt werden, auf denen die Schnittpunkte des Annulus mit der Schnittebene ausgewählt werden (sog. Landmarks). Schließlich kann der Annulus auch auf einem Langachsenschnitt detektiert oder durch eine Kombination der vorgenannten Verfahren detektiert werden.

Die Modellfläche wird nun zwischen dieser Flächenbegrenzung aufgespannt, wobei die Modellfläche selbst nicht notwendigerweise planar sein muss. Jedoch verbindet die Modellfläche die Punkte auf der Flächenbegrenzungslinie bevorzugt auf kürzestem Weg, bildet sozusagen eine gespannte "Haut", die durch die Flächenbegrenzung aufgespannt wird. Natürlich kann die Modellfläche auch durch eine zwei-, drei- oder mehrgradige Funktion aufgespannt werden.

Die Modellfläche wird anschließend durch Abstandsinformationen korrigiert. Hierzu werden die drei- oder vierdimensionalen Bilddatensätze herangezogen, in dem das dreidimensionale Volumen-Rendering des Objekts im Wesentlichen senkrecht auf die Modellfläche ausgerichtet wird, so dass die Informationen über den Abstand zwischen der Modellfläche und der nicht planen Fläche des Objekts ausgewertet werden können, bis die korrigierte Modellfläche entsteht. Die Abstandsinformationen liegen nach einer besonderen Ausführungsform der Erfindung längs im Wesentlichen senkrecht auf der Modellfläche stehender Vektoren, in dem ein Volumen-Rendering eines dreidimensionalen Bilddatensatzes der nicht planen Fläche entsprechend ausgewertet wird.

Richtet man beispielsweise den aus der DE 103 39 979 A1 bekannten "Zeiger" im Wesentlichen senkrecht auf die Modellfläche aus, so erhält man über die Tiefenkarte des Volumen-Renderers die Abstandsinformation zwischen der Modellfläche und der nicht planen Fläche, d. h. beispielsweise der Klappensegel des Herzens.

Nach einer weiteren bevorzugten Ausführungsform der vorliegenden Erfindung erfolgt das Korrigieren der Modellfläche durch die Abstandsinformationen iterativ, bis die korrigierte Modellfläche entsteht. So ist es ebenfalls möglich, die Abstandsinformationen mindestens teilweise auch längs spitzwinkelig auf der Modellfläche stehender gekippter Vektoren zu gewinnen, wobei das dreidimensionale Volumen-Rendering des Objekts dann im Wesentlichen parallel zu den gekippten Vektoren ausgerichtet wird, um gegebenenfalls Flächen detektieren zu können, die gegenüber der Modellfläche und einem darauf stehenden, im Wesentlichen senkrechten Vektor Hinterschneidungen aufweisen, die mittels solcher senkrechter Vektoren nicht iterativ approximiert werden können. Anhand der gekippten Vektoren ist es aber möglich, solche hinterschneidenden Flächen iterativ zu approximieren, in dem - ausgehend von einer mittels senkrecht stehender Vektoren gewonnenen Approximation - die so korrigierte Modellfläche weiter mittels gekippter Vektoren approximiert wird, bis die Tiefenkarten solcher gekippter Volumen-Renderings ausgewertet sind.

Die korrigierte Modellfläche wird nach einer weiteren bevorzugten Ausführungsform der vorliegenden Erfindung vor dem Darstellen in die mindestens zwei Teilflächen getrennt, wobei die Trennung längs Bereichen größter Krümmung, längs größter Abstände zur Modellfläche und/oder längs ähnlicher oder im Wesentlichen orthogonaler Oberflächennormalen erfolgt. Es erfolgt somit eine automatische Detektion der Trennlinien zwischen den einzelnen Teilflächen der nicht planen Fläche, so dass diese einzelnen Teilflächen dann separat dargestellt werden können. Die Darstellung dieser getrennten, korrigierten Modellflächen kann beispielsweise anhand eines Drahtgittermodells erfolgen, wobei auch die zeitliche Veränderung dieser Flächen kontinuierlich dargestellt werden kann. Es ergibt sich somit eine Darstellung von approximierten Teilmodellflächen, die die Bewegung, beispielsweise der Mitralklappen des Herzens, während des Herzschlags wiedergeben.

Die Flächenbegrenzung der Modellfläche der vorliegenden Erfindung kann auch durch zwei oder mehr Begrenzungslinien aufgespannt werden, z.B. wenn im Inneren einer äußeren, geschlossenen Flächenbegrenzung eine weitere, innere, geschlossene Flächenbegrenzung liegt, so dass z.B. ein "Loch" im Inneren entsteht. Die verformte bzw. korrigierte Modellfläche enthält dann ebenfalls dieses "Loch", allerdings entsprechend an die reale Kontur des Objekts angepasst.

Die vorliegende Erfindung betrifft auch eine Vorrichtung zur Segmentierung von medizinischen Bildern einer nicht planen Fläche eines Objekts, beispielsweise einer Herzklappe, mit Detektionsmitteln zum Detektieren und Festlegen einer Flächenbegrenzung, die die nicht plane Fläche des Objekts begrenzt, mit Modelliermitteln zum Erstellen einer Modellfläche, die zwischen der Flächenbegrenzung aufgespannt wird, wobei diese Modelliermittel die Modellfläche durch Abstandsinformationen, die Informationen über den Abstand zwischen der Modellfläche und der nicht planen Fläche des Objekts beinhalten, korrigieren, bis eine korrigierte Modellfläche entsteht, und Darstellungsmitteln zum Darstellen der korrigierten Modellfläche.

Die erfindungsgemäße Vorrichtung weist darüber hinaus mit Vorteil Ausrichtmittel zum Ausrichten des dreidimensionalen Volumen-Renderings des Objekts auf, das im Wesentlichen senkrecht auf der Modellfläche steht, so dass die Informationen über den Abstand zwischen der Modellfläche und der nicht planen Fläche des Objekts ausgewertet werden können, bis die korrigierte Modellfläche entsteht. Diese Ausrichtmittel können das dreidimensionale Volumen-Rendering des Objekts auch spitzwinklig zur Modellfläche ausrichten, so dass gegebenenfalls Hinterschneidungen der nicht planen Fläche ebenfalls approximiert werden können. Solche für das vorliegende Verfahren geeignete Ausrichtmittel sind mit Vorteil solche in der DE 103 39 979 A1 beschriebenen Mittel, die einen interessierenden Bereich des dreidimensionalen Volumen-Renderings aus einer bestimmten Blickrichtung darstellen und zusätzlich relativ zur Modellfläche ausrichten, um die entsprechenden Abstandsinformationen, d. h. die Tiefenkarte des Renderers, entsprechend auszurichten.

Die vorliegende Erfindung betrifft darüber hinaus ein Computerprogrammprodukt, welches einen auf einem Computer lesbaren Medium gespeicherten Programmcode enthält, der eine Durchführung des Verfahrens nach einem der Ansprüche 1 - 10 bewirkt, wenn der Programmcode auf einem Computer ausgeführt wird.

Eine bevorzugte Ausführungsform der vorliegenden Erfindung zur Segmentierung von insbesondere Klappensegeln im Herzen wird anhand der Zeichnungen näher erläutert. Dabei zeigen:
- Fig. 1: die schematische, dreidimensionale Ansicht des zu untersu- chenden Objekts 1 mit schematisch angedeuteter, nicht pla- ner Fläche;
- Fig. 2: den Schnitt S durch die schematische Ansicht nach Fig. 1;
- Fig. 3a: die schematische Aufsicht auf eine Modellfläche;
- Fig. 3b: die schematische Aufsicht auf eine korrigierte Modellfläche;
- Fig. 4: die schematische, dreidimensionale Ansicht eines Mitralklap- penprolaps, und
- Fig. 5: die Seitenansicht des Mitralklappenprolaps nach Fig. 4 mit sich hinterschneidender, nicht planer Flächen.

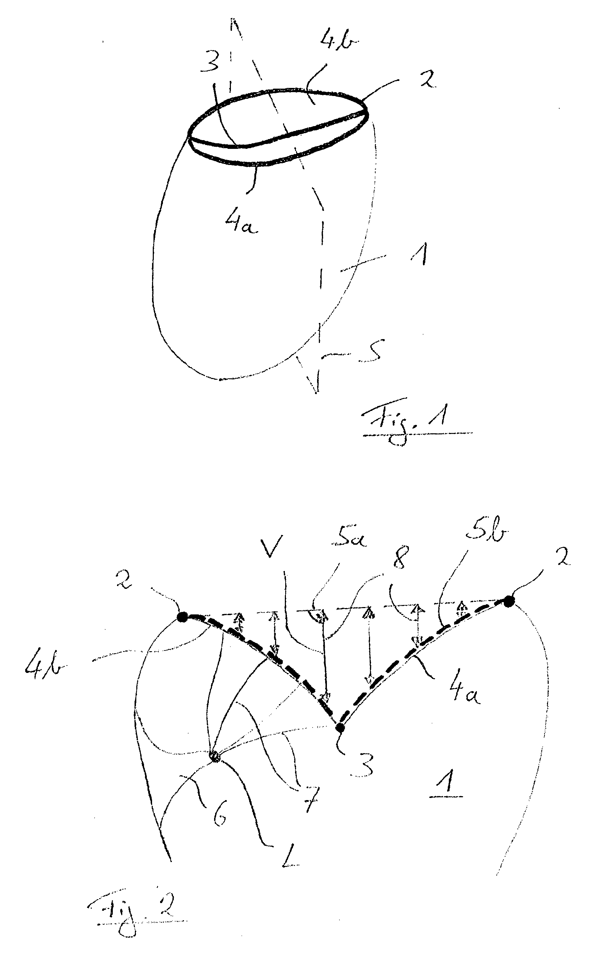

Fig. 1 zeigt die dreidimensionale, schematische Queransicht auf z. B. die linke Herzkammer, mit schematisch angedeuteter Mitralklappe, wobei die Aortenklappe und weitere Details nicht dargestellt sind. Die Mitralklappe ist eine der beiden Vorhof-Herzkammer-Klappen im Herz und besteht im Wesentlichen aus zwei Segeln, die mittels Sehnenfäden 7 an den Papillarmuskeln 6 und somit in der Herzkammer befestigt sind. Die nach unten in die linke Herzkammer hineinragende Wölbung der Mitralklappensegel verhindert einen Blutrückfluss in den linken Vorhof, wenn die linke Herzkammer kontrahiert.

In der medizinischen Bilddiagnostik ist es von besonderer Wichtigkeit, die Funktion dieser Mitralklappe untersuchen zu können. Die beiden wichtigsten Erkrankungen der Mitralklappe, nämlich die Mitralstenose und die Mitralklappeninsuffizienz, können behandelt werden, wenn sie frühzeitig erkannt werden. Zu diesem Zweck wird dieser Bereich des Herzens in der Regel mittels einer transoesophagealen Echokardiografie aufgenommen und es werden drei- oder vierdimensionale Bilddatensätze der Mitralklappe gewonnen. Schnittbilder durch die Mitralklappe können dann bei vierdimensionalen Ultraschallbildaufnahmen beispielsweise eine Mitralklappeninsuffizienz zeigen, d. h. Blutleckströme in den linken Vorhof können anhand dieser vierdimensionalen, d. h. bewegten, dreidimensionalen Ultraschallbilder gezeigt werden.

Jedoch ist es bisher nicht möglich, die Mitralklappensegel separat und dreidimensional voneinander getrennt automatisch zu separieren, um deren Bewegung einzeln und über deren gesamte Ausdehnung untersuchen zu können, was aber zur genauen Lokalisierung von Leckströmen oder Fehlbildungen besonders wichtig wäre.

Die vorliegende Erfindung ermöglicht aber nun eine solche automatische Segmentierung der zwei Klappensegel der Mitralklappe, in dem das Objekt 1, wie beispielsweise die linke Herzkammer, mittels beispielsweise einer transoesophagealen Echokardiografie aufgenommen wird. Aus diesen drei- oder vierdimensionalen Bilddatensätzen lässt sich eine Flächenbegrenzung 2 extrahieren, die ― wie in Fig. 1 dargestellt - den Annulus der Mitralklappe repräsentiert. Die Mitralklappe besteht dabei aus einer ersten gekrümmten Teilfläche 4a und einer zweiten gekrümmten Teilfläche 4b, die durch eine Trennlinie 3 getrennt sind. Die Trennlinie 3 stellt die Schließungslinie dar, d. h. der Bereich, der die linke Herzkammer gegenüber dem linken Vorhof abdichtet.

Fig. 2 zeigt die Schnittdarstellung S eines Schnitts durch die schematische, dreidimensionale Ansicht nach Fig. 1 mit dem oberen Bereich des Objekts 1, das zwei gekrümmte Teilflächen 4a und 4b zwischen der Flächenbegrenzung 2 und der Trennlinie 3 aufweist.

Basierend auf einem dreidimensionalen Volumen-Rendering wird nun die in Fig. 1 gezeigte Flächenbegrenzung 2 automatisch detektiert, in dem beispielsweise Landmarken oder Punkte besonders starker Krümmung im oberen Bereich des Objekts 1 detektiert und mittels einer Interpolation miteinander zu einer zusammenhängenden Begrenzungslinie verbunden werden. Im Anschluss daran wird die Modellfläche 5a zwischen dieser Flächenbegrenzung 2 aufgespannt. Die Modellfläche 5a wird dann anhand von Abstandsinformationen 8 korrigiert, wobei diese Abstandsinformationen 8 Informationen über den Abstand zwischen der Modellfläche 5a und der nicht planen Fläche 4 des Objekts 1 beinhalten. Durch beispielsweise iterative Approximation der Modellfläche 5a längs eines im Wesentlichen auf der Modellfläche 5a senkrecht stehenden Tiefenvektors V lässt sich diese an die nicht planen Teilflächen 4a bzw. 4b anpassen.

Die Modellfläche 5a wird quasi so verformt, dass sie am Ende der Geometrie der nicht planen Teilflächen 4a bzw. 4b entspricht. Dazu richtet man das Volumen-Rendering so aus, dass der Tiefenvektor V im Wesentlichen senkrecht auf der Modellfläche 5a steht. In diesem Fall kann die Tiefenkarte des Volumen-Renderers verwendet werden, um die Abstandsinformationen 8 zu liefern, die die Lage der nicht planen bzw. gekrümmten Flächen 4a, 4b automatisch an die Modellfläche 5a weitergibt, so dass sich diese zu einer korrigierten Modellfläche 5b hin approximiert.

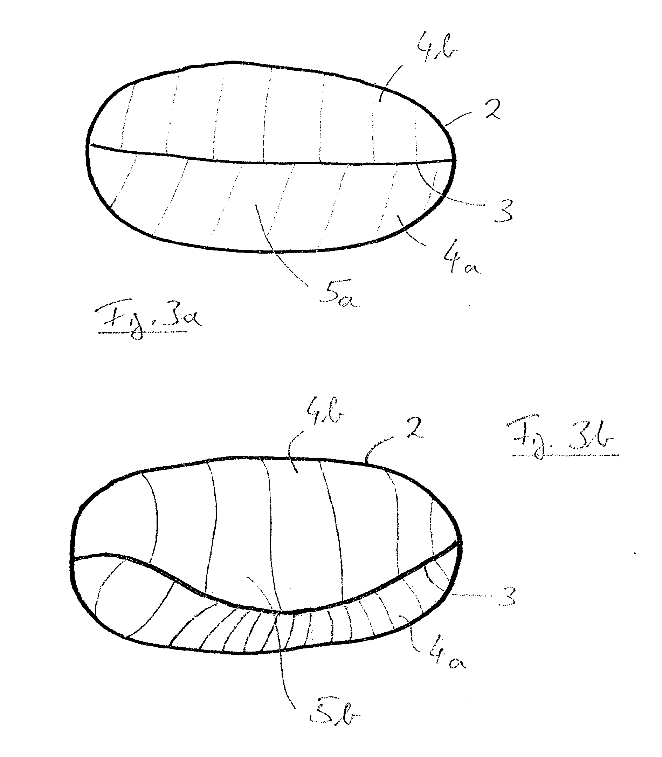

Fig. 3a zeigt die durch die Flächenbegrenzung 2 aufgespannte Modellfläche 5a über den Teilflächen 4a bzw. 4b und der Trennungslinie 3. Fig. 3b zeigt die am Ende des erfindungsgemäßen Verfahrens approximierte korrigierte Modellfläche 5b, die nun längs der gekrümmten Teilflächen 4a bzw. 4b hin verformt wurde.

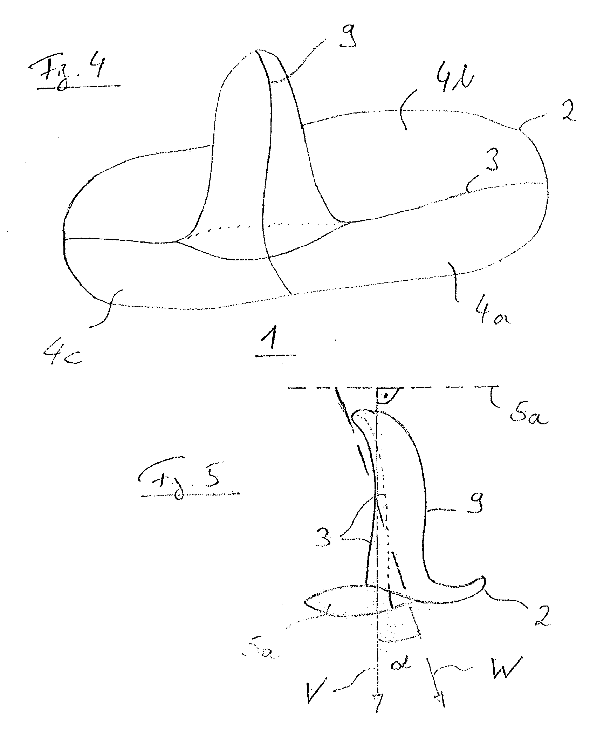

Fig. 4 zeigt eine Erkrankung der Mitralklappe, nämlich einen Mitralklappenprolaps, der dazu führt, dass im Wesentlichen drei Teilflächen entstehen, wenn sich ein Teil der ersten Teilfläche 4a, d. h. wenn sich ein Klappensegel in den Bereich des linken Vorhofs hineinwölbt, so dass eine dritte gekrümmte Teilfläche 4c entsteht, die über eine zweite Trennlinie 9 gegenüber der ersten gekrümmten Teilfläche 4a abgegrenzt wird.

Fig. 5 zeigt nun schematisch die Seitenansicht auf den Mitralklappenprolaps nach Fig. 4, wobei die Modellfläche 5a lediglich schematisch auch am oberen Ende des Tiefenvektors V dargestellt ist. Tatsächlich liegt sie zwischen der Flächenbegrenzung 2. Würde man eine solche Modellfläche 5a lediglich längs im Wesentlichen senkrecht stehender Tiefenvektoren V korrigieren, so würden sich dann Fehler ergeben, wenn die gekrümmte Teilfläche Hinterschneidungen aufweist, wie dies schematisch in Fig. 5 dargestellt ist. Zu diesem Zweck sieht die Erfindung vor, das Korrigieren der Modellfläche 5a auch längs spitzwinklig auf der Modellfläche 5a stehender, gekippter Vektoren W vorzunehmen, wobei das dreidimensionale Volumen-Rendering des Objekts 1 dann auch im Wesentlichen parallel zu diesen gekippten Vektoren W ausgerichtet wird. So sollte die Modellfläche 5a zunächst anhand im Wesentlichen senkrecht stehender Tiefenvektoren V approximiert werden, um in weiteren iterativen Anpassungsschritten zu prüfen, ob sich aufgrund spitzwinklig gekippter Vektoren W mögliche Hinterschneidungen auftun, in die die Modellfläche 5a dann weiter "hineinkorrigiert" werden kann.

Sobald die korrigierte Modellfläche 5b erzeugt wurde, können die einzelnen Teilflächen 4a, 4b, 4c separiert werden, in dem beispielsweise standardmäßige Verfahren zum Separieren angewendet werden (z. B. silhouette detection). Zu diesem Zweck werden der Tiefengradient und/oder die Ähnlichkeit der Oberflächennormalen ausgewertet. Alternativ lassen sich auch die Stellen größter Krümmung auf der korrigierten Modellfläche 5b detektieren und entsprechend markieren. Durch Verbinden dieser Punkte entstehen die Trennungslinien 3 bzw. 9 und die so gewonnenen Teilflächen können dann einzeln dargestellt werden. Beispielsweise kann die zweite gekrümmte Teilfläche 4b, die durch einen Teil der Flächenbegrenzung 2 und der Trennlinie 3 aufgespannt wird, in einem Drahtgittermodell des Herzens dargestellt und vierdimensional, d. h. bewegt, gezeigt werden. Durch zweidimensionales oder dreidimensionales Tracking verfolgt man die so segmentierten Strukturen (beispielsweise Punkte des Gitternetzes) über den kompletten Herzzyklus und erhält somit eine dynamische Darstellung der einzelnen, gekrümmten Teilflächen, d. h. der Segelklappen, beispielsweise der Mitralklappe des Herzens.

Generell ist ein Tracking der Netzpunkte sinnvoll, da bei einem bildbasierten Tracking eine Zuordnung der einzelnen zu trackenden Punkte nicht immer zuverlässig sichergestellt werden kann.

Darüber hinaus ist es denkbar, zusätzliche Landmarken L zu detektieren, wie beispielsweise die in Fig. 2 dargestellten Spitzen der Papillarmuskeln 6 oder die Enden der Sehnenfäden 7, so dass die so gewonnenen Landmarken L zusammen mit Teilflächen in einem Drahtgittermodell dynamisch dargestellt werden können. Somit kann der vollständige Klappenapparat in seiner Dynamik dreidimensional dargestellt werden.

Durch die vorliegende Erfindung entfallen die bisher langwierigen Benutzerinteraktionen und die damit verbundenen Fehlerquellen. Selbst wenn eine vollständig automatisierte Segmentierung aufgrund von unzureichend guten Daten nicht möglich sein sollte, ist immerhin noch eine Verkürzung der Benutzerinteraktion gegeben, in dem die Daten entsprechend der vorliegenden Erfindung aufbereitet werden.

## Patentansprüche

1. Verfahren zur Segmentierung von medizinischen Bildern einer nicht planen Fläche (4) eines Objekts (1), insbesondere einer Herzklappe, mit den folgenden Schritten:
- Detektieren einer Flächenbegrenzung (2), die die nicht plane Fläche (4) des Objekts (1) begrenzt,
- Erstellen einer Modellfläche (5a), die zwischen der Flächenbegrenzung (2) aufgespannt wird,
- Korrigieren der Modellfläche (5a) durch Abstandsinformationen (8), die Informationen über den Abstand zwischen der Modellfläche (5a) und der nicht planen Fläche (4) des Objekts (1) beinhalten, bis eine korrigierte Modellfläche (5b) entsteht, wobei dies anhand von drei- oder vierdimensionalen Bilddatensätzen erfolgt, indem ein dreidimensionales Volumenrendering des Objekts (1) im Wesentlichen senkrecht auf die Modellfläche (5a) ausgerichtet wird und die Abstands informationen (8) aus der Tiefenkarte des Volumen-Renderers gewonnen werden, so dass die Informationen über den Abstand zwischen der Modellfläche (5a) und der nicht planen Fläche (4) des Objekts (1) ausgewertet werden können, bis die korrigierte Modellfläche (5b) entsteht, und
- Darstellen der korrigierten Modellfläche (5b).

2. Verfahren nach Anspruch 1, wobei
die nicht plane Fläche (4) aus mindestens einer ersten Teilfläche (4a) und einer zweiten Teilfläche (4b) besteht, die jeweils gekrümmt und mittels einer Trennlinie (3) voneinander getrennt sind und wobei die korrigierte Modellfläche (5b) vor dem Darstellen längs der Trennlinie (3) in die mindestens zwei Teilflächen (4a, 4b) getrennt wird.

3. Verfahren nach Anspruch 1 oder 2, wobei
die Flächenbegrenzung (2) eine geschlossene Linie ist, so dass die Modellfläche (5a) die nicht plane Fläche (4) überspannt.

4. Verfahren nach einem der vorhergehenden Ansprüche,
**dadurch gekennzeichnet, dass**
das Detektieren der Flächenbegrenzung (2) anhand von drei- oder vierdimensionalen Bilddatensätzen erfolgt, indem Landmarken detektiert werden, die die nicht plane Fläche (4) begrenzen und indem diese Landmarken dann zu einer zusammenhängenden Linie interpoliert werden.

5. Verfahren nach einem der vorhergehenden Ansprüche,
**dadurch gekennzeichnet, dass**
die Abstandsinformationen (8) längs im Wesentlichen senkrecht auf der Modellfläche (5a) stehender Vektoren (V) gewonnen werden, indem ein Volumenrendering eines dreidimensionalen Bilddatensatzes der nicht planen Fläche (4) entsprechend ausgewertet wird.

6. Verfahren nach einem der vorhergehenden Ansprüche,
**dadurch gekennzeichnet, dass**
das Korrigieren der Modellfläche (5a) durch die Abstandsinformationen (8) iterativ durchgeführt wird, bis die korrigierte Modellfläche (5b) entsteht.

7. Verfahren nach Anspruch 6,
**dadurch gekennzeichnet, dass**
die Abstandsinformationen (8) mindestens teilweise auch längs spitzwinklig auf der Modellfläche (5a) stehender gekippter Vektoren (W) gewonnen werden, wobei das dreidimensionale Volumenrendering des Objekts (1) dann im Wesentlichen parallel zu den gekippten Vektoren ausgerichtet wird.

8. Verfahren nach einem der vorhergehenden Ansprüche,
**dadurch gekennzeichnet, dass**
die korrigierte Modellfläche (5b) vor dem Darstellen in die mindestens zwei Teilflächen (4a, 4b) getrennt wird, wobei die Trennung längs Bereichen größter Krümmung, größter Abstände zur Modellfläche (5a) und/oder ähnlicher oder im wesentlichen orthogonaler Oberflächennormalen erfolgt.

9. Verfahren nach Anspruch 8,
**dadurch gekennzeichnet, dass**
die Darstellung der getrennten, korrigierten Modellflächen (5b) anhand eines Drahtgittermodells erfolgt, wobei auch die zeitliche Veränderung dieser Flächen kontinuierlich dargestellt wird.

10. Vorrichtung zur Segmentierung von medizinischen Bildern einer nicht planen Fläche (4) eines Objekts (1), insbesondere einer Herzklappe, mit
- Detektionsmitteln zum Detektieren und Festlegen einer Flächenbegrenzung (2), die die nicht plane Fläche (4) des Objekts (1) begrenzt,
- Modelliermitteln zum Erstellen einer Modellfläche (5a), die zwischen der Flächenbegrenzung (2) aufgespannt wird,
- wobei diese Modelliermittel die Modellfläche (5a) durch Abstandsinformationen (8), die Informationen über den Abstand zwischen der Modellfläche (5a) und der nicht planen Fläche (4) des Objekts (1) beinhalten, korrigieren, bis eine korrigierte Modellfläche (5b) entsteht,
- Ausrichtmitteln zum Ausrichten eines dreidimensionalen Volumenren-derings des Objekts (1) im Wesentlichen senkrecht auf die Modellfläche (5a), so dass die Informationen über den Abstand zwischen der Modellfläche (5a) und der nicht planen Fläche (4) des Objekts (1) aus der Tiefenkarte des Volumen - Renderers gewonnen werden und ausgewertet werden können, bis die korrigierte Modellfläche (5b) entsteht, und
- Darstellungsmitteln zum Darstellen der korrigierten Modellfläche (5b).

11. Vorrichtung nach Anspruch 10, wobei die Ausrichtmittel den dreidimensionalen Volumenrendering des Objekts (1) auch spitzwinklig zur Modellfläche (5a) ausrichten.

12. Computerprogrammprodukt, welches einen auf einem computerlesbaren Medium gespeicherten Programmcode enthält, der eine Durchführung des Verfahrens nach einem der Ansprüche 1 bis 9 bewirkt, wenn der Programmcode auf einem Computer ausgeführt wird.

## Claims

1. A method for segmenting medical images of a non-planar surface (4) of an object (1), especially a heart valve, comprising the steps of:
- detecting a surface limitation (2) limiting the non-planar surface (4) of the object (1),
- creating a surface model (5a) which extends between the surface limitation (2),
- correcting the surface model (5a) by way of distance information (8), comprising information on the distance between the surface model (5a) and the non-planar surface (4) of the object (1), until a corrected surface (5b) is formed, wherein this is performed by means of three-or four-dimensional image data sets by orientating a three- or four-dimensional volume rendering of the object (1) essentially perpendicular to the surface model (5a), and the distance information (8) is acquired from the depth map of the volume renderer, so that information on the distance between the surface model (5a) and the non-planar surface (4) of the object (1) may be analyzed until the corrected surface model (5b) is formed, and
- representing the corrected surface model (5b).

2. The method according to claim 1, wherein
the non-planar surface (4) consists of at least a first partial surface (4a) and at least a second partial surface (4b) each of which is curved and which are separated from each other by a separation line (3) and wherein the corrected surface model (5b), prior to representation, is separated along the separation line (3) into the at least two partial surfaces (4a, 4b).

3. The method according to claim 1 or 2, wherein
the surface limitation (2) is a closed line, such that the surface model (5a) spans across the non-planar surface (4).

4. The method according to one of the preceding claims,
**characterized in that**
the detection of the surface limitation (2) is performed by means of three-or four-dimensional image data sets by detecting landmarks which limit the non-planar surface (4) and by interpolating these landmarks into a contiguous line.

5. The method according to one of the preceding claims,
**characterized in that**
the distance information (8) is acquired along vectors (V) which are essentially perpendicular to the surface model (5a) by appropriately analyzing a volume rendering of a three-dimensional image data set of the non-planar surface (4).

6. The method according to one of the preceding claims,
**characterized in that**
the correction of the surface model (5a) by way of distance information (8) is iteratively performed until the corrected surface model is formed.

7. The method according to claim 6,
**characterized in that**
the distance information (8) is acquired at least in part along inclined vectors (W) forming an acute angle with the surface model (5a), wherein the three-dimensional volume rendering of the object (1) is thus orientated essentially parallel to the inclined vectors.

8. Method according to one of the preceding claims,
**characterized in that**
the corrected surface model (5b) is separated into at least two partial surfaces (4a, 4b) prior to representation, wherein the separation is performed along regions of maximum curvature, maximum distances from the surface model (5a) and/or along similar or essentially orthogonal surface verticals.

9. The method according to claim 8,
**characterized in that**
the representation of the separated corrected model surfaces (5b) is performed by way of a wire frame model, wherein chronological changes of said surfaces are represented in a continuous manner as well.

10. Device for segmenting medical images of a non-planar surface (4) of an object (1), especially a heart valve, comprising:
- detection means for detecting and determining a surface limitation (2) limiting the non-planar surface (4) of the object (1),
- modelling means for generating a surface model (5a) which extends between the surface limitation (2),
- said modelling means correcting the surface model (5a) by distance information (8), comprising information on the distance between the surface model (5a) and the non-planar surface (4) of the object (1), until a corrected surface (5b) is formed,
- orientating means for orientating a three- or four-dimensional volume rendering of the object (1) essentially perpendicular to the surface model (5a), so that information on the distance between the surface model (5a) and the non-planar surface (4) of the object (1) may be obtained from the depth map of the volume renderer and may be analyzed until the corrected surface (5b) is formed, and
- representation means for representing the corrected surface model (5b).

11. A device according to claim 10, wherein the orientating means furthermore orientate the three dimensional volume rendering of the object (1) in an acute angle in relation to the surface model (5a).

12. A computer program product comprising a program code stored on a computer-readable medium which causes execution of the method according to one of the claims 1 to 9, when the program code is executed on a computer.

## Revendications

1. Procédé de segmentation d'images médicales d'une surface non-plane (4) d'un objet (1), surtout d'une valvule, ayant les étapes suivantes consistant à :
- détecter une limitation de surface (2) limitant la surface non-plane (4) de l'objet (1),
- créer une surface modèle (5a), qui s'étend entre la limitation de surface (2),
- corriger la surface modèle (5a) par des informations d'écart (8), comprenant des informations concernant l'écart entre la surface modèle (5a) et la surface non-plane (4) de l'objet (1), jusqu'à ce qu'une surface corrigée (5b) se forme, ceci étant fait par l'aide de données d'image trois ou quatre dimensionnelles en alignant un rendu volumique trois dimensionnel de l'objet (1) sensiblement perpendiculaire à la surface modèle (5a), et les information d'écart (8) sont procurées de la carte de profondeur du moteur de rendu, pour que les informations concernant l'écart entre la surface modèle (5a) et la surface non-plane (4) de l'objet (1) puissent être analysées jusqu'à ce que la surface modèle corrigée (5b) se forme, et
- représenter la surface modèle corrigée (5b).

2. Procédé selon la revendication 1, dans lequel
la surface non-plane (4) consiste en au moins une première surface partielle (4a) et au moins une deuxième surface partielle (4b) dont chacune est crochue et qui sont séparées l'une de l'autre au moyen d'un trait de séparation (3) et dans lequel la surface modèle corrigée (5b), avant la représentation, est séparée le long du trait de séparation (3) en les au moins deux surfaces partielles (4a, 4b).

3. Procédé selon la revendication 1 ou 2, dans lequel
la limitation de surface (2) est un trait fermé, de telle manière que la surface modèle (5a) s'étend à travers la surface non-plane (4).

4. Procédé selon l'une des revendications précédentes,
**caractérisé par le fait que**
la détection de la limitation de surface (2) est faite en s'appuyant sur des données d'image trois ou quatre-dimensionnelles en détectant des marqueurs importants limitant la surface non-plane (4) et en interpolant ces marqueurs important en un trait cohérant.

5. Procédé selon l'une des revendications précédentes,
**caractérisé par le fait que**
les informations d'écart (8) sont procurées le long des vecteurs (V) sensiblement perpendiculaires à la surface modèle (5a) en analysant de façon appropriée un rendu volumique direct d'une donnée d'image trois-dimensionnelle de la surface non-plane (4).

6. Procédé selon l'une des revendications précédentes,
**caractérisé par le fait que**
la correction de la surface modèle (5a) par les informations d'écart (8) est faite itérativement jusqu'à ce-que la surface modèle corrigée se forme.

7. Procédé selon la revendication 6,
**caractérisé par le fait que**
les informations d'écart (8) sont procurées au moins partiellement le long des vecteurs (W) inclinés formant un angle aigu avec la surface modèle (5a), dans lequel le rendu volumique direct trois-dimensionnel de l'objet (1) est alors aligné sensiblement d'une manière parallèle aux vecteurs inclinés.

8. Procédé selon l'une des revendications précédentes,
**caractérisé par le fait que**
la surface modèle corrigée (5b) est séparée en les au moins deux surfaces partielles (4a, 4b) avant la représentation, dans lequel la séparation est fait le long des régions de courbure maximale, des écarts maximaux à la surface modèle (5a) et/ou des normales de surface semblables ou sensiblement orthogonales.

9. Procédé selon la revendication 8,
**caractérisé par le fait que**
la représentation des surfaces modèle corrigées séparées (5b) est faite en appuyant sur un modèle de grillage métallique, dans lequel le changement chronologique de ces surfaces est également représenté d'une manière continue.

10. Dispositif de segmentation d'images médicales d'une surface non-plane (4) d'un objet (1), surtout d'une valvule, comprenant :
- des moyens de détection pour la détection et détermination d'une limitation de surface (2) limitant la surface non-plane (4) de l'objet (1),
- des moyens de modelage pour créer une surface modèle (5a), qui s'étend entre la limitation de surface (2),
- lesdits moyens de modelage corrigeant la surface modèle (5a) par des informations d'écart (8), comprenant des informations concernant l'écart entre la surface modèle (5a) et la surface non-plane (4) de l'objet (1), jusqu'à ce qu'une surface corrigée (5b) se forme,
- des moyens d'alignement pour l'alignement d'un rendu volumique direct trois ou quatre dimensionnel de l'objet (1) sensiblement perpendiculaire à la surface modèle (5a), pour que les informations concernant l'écart entre la surface modèle (5a) et la surface non-plane (4) de l'objet (1) puissent être procurées de la carte de profondeur du monteur de rendue et puissent être analysées jusqu'à ce que la surface corrigée (5b) se forme, et
- de moyens de représentation pour la représentation de la surface modèle corrigée (5b).

11. Dispositif selon la revendication 10, dans lequel les moyens d'alignement alignent le rendu volumique trois-dimensionnel de l'objet (1) également en un angle aigu en relation à la surface modèle (5a).

12. Produit de programme logiciel contenant un code de programmation enregistré sur un milieu lisible informatiquement, qui cause la mise en oeuvre du procédé selon l'une des revendications 1 à 9, lorsque le code de programmation est effectué sur un logiciel.
